# EUROPEAN PATENT APPLICATION

(11) **EP 4 819 275 A1**
(43) Date of publication of application: **07.10.2026**
(21) Application number: 25731405.4
(22) Date of filing: 23.01.2025
(51) Int. Cl.: H01M 10/0525, H01M 10/625, H01M 10/647, H01M 10/653, H01M 10/6555, H01M 10/658

(54) **BATTERY APPARATUS AND ELECTRIC DEVICE**

(71) Applicant: CONTEMPORARY AMPEREX TECHNOLOGY (HONG KONG) LIMITED, Hong Kong (HK)
(72) Inventor: WANG, Liang, Ningde, Fujian 352100 (CN); QIAN, Ou, Ningde, Fujian 352100 (CN); LI, Yao, Ningde, Fujian 352100 (CN)
(74) Representative: Gong, Jinping
(86) International application number: PCT/CN2025/074369
(87) International publication number: WO 2026/156619

(57) **Abstract**

Provided are a battery apparatus (100) and an electric device (200). The battery apparatus (100) includes: a plurality of battery sets (10), where the battery sets (10) are sequentially arranged along a first direction, the battery sets (10) include a wrapping shell (11) and at least one pouch battery cell (12), the pouch battery cell (12) is disposed inside the wrapping shell (11), and among the plurality of battery sets (10), a heat insulating member (20) is provided between at least two adjacent battery sets (10).

## Description

### TECHNICAL FIELD

The present application relates to the technical field of batteries, and in particular, to a battery apparatus and an electric device.

### BACKGROUND

In the related art, there is a high difficulty in thermal protection between the adjacent battery sets in the pouch battery apparatus, which affects the further improvement of the reliability of the pouch battery apparatus.

### SUMMARY

The present application aims to solve at least one of the technical problems existing in the prior art. Therefore, an objective of the present application is to provide a battery apparatus and an electric device, where the battery apparatus features higher reliability.

The present application provides a battery apparatus, including: a plurality of battery sets, where the battery sets are sequentially arranged along a first direction, the battery sets include a wrapping shell and at least one pouch battery cell, the pouch battery cell is disposed inside the wrapping shell, and among the plurality of battery sets, a heat insulating member is provided between at least two adjacent battery sets.

According to the battery apparatus of the embodiments of the present application, by arranging the heat insulating member between at least two adjacent battery sets, the heat transfer among the plurality of battery sets can be improved, and the high-pressure gas-fire flow can be buffered through the heat insulating member, such that the spread speed of thermal runaway among the battery sets can be reduced, thus improving the reliability of the battery apparatus.

According to some embodiments of the present application, the heat insulating member is provided between each pair of adjacent battery sets.

According to some embodiments of the present application, the heat insulating member is configured as any one of a nano-heat insulating material member, a glass fiber heat insulating material member, and a ceramic fiber heat insulating material member.

According to some embodiments of the present application, a thickness dimension of the heat insulating member in the first direction is 1 mm to 4 mm.

According to some embodiments of the present application, the pouch battery cell is configured as a lithium iron phosphate battery; and when the total energy capacity within any two adjacent battery sets is less than 0.5 KWh, the heat insulating member is not provided between the two adjacent battery sets.

According to some embodiments of the present application, the pouch battery cell is configured as a lithium iron phosphate battery; and when the total energy capacity within the battery set is less than or equal to 1 KWh and greater than or equal to 0.5 KWh, the heat insulating member is provided between the battery set and the battery set adjacent thereto, and the thickness of the heat insulating member is 1 mm to 2 mm.

According to some embodiments of the present application, the pouch battery cell is configured as a lithium iron phosphate battery; and when the total energy capacity within the battery set is greater than 1 KWh, the heat insulating member is provided between the battery set and the battery set adjacent thereto, and the thickness of the heat insulating member is 2 mm to 3 mm.

According to some embodiments of the present application, the pouch battery cell is configured as a ternary lithium battery; and when the total energy capacity within any two adjacent battery sets is less than 0.5 KWh, the heat insulating member is not provided between the two adjacent battery sets.

According to some embodiments of the present application, the pouch battery cell is configured as a ternary lithium battery; and when the total energy capacity within the battery set is less than or equal to 1 KWh and greater than or equal to 0.5 KWh, the heat insulating member is provided between the battery set and the battery set adjacent thereto, and the thickness of the heat insulating member is 2 mm to 3 mm.

According to some embodiments of the present application, the pouch battery cell is configured as a ternary lithium battery; and when the total energy capacity within the battery set is greater than 1 KWh, the heat insulating member is provided between the battery set and the battery set adjacent thereto, and the thickness of the heat insulating member is 3 mm to 4 mm.

According to some embodiments of the present application, the wrapping shell includes: a first plate and second plates disposed on both sides of the first plate in the first direction. The second plates are opposite to the pouch battery cell in the first direction, and the heat insulating member is connected to the second plates.

According to some embodiments of the present application, one end, facing away from the first plate, of the second plate forms an opening, and the wrapping shell is connected to a case of the battery apparatus through a position of the opening.

According to some embodiments of the present application, the case is provided with a bottom plate, and end surfaces, away from the first plate, of the second plates are connected to the bottom plate through an adhesive layer.

According to some embodiments of the present application, the bottom plate includes a cold plate, and the adhesive layer is located between the cold plate and the plurality of pouch battery cells.

According to some embodiments of the present application, the adhesive layer includes: an adhesive layer body and an adhesive overflow part. The adhesive overflow part is located on one side, facing the plurality of the pouch battery cells, of the adhesive layer body, and is located between adjacent pouch battery cells, and/or between the pouch battery cell and the second plate, and/or between the second plate and the heat insulating member.

According to some embodiments of the present application, the pouch battery cell includes: a flexible shell and an electrode assembly disposed inside the flexible shell. The flexible shell is provided with a side surface opposite to a large surface of the electrode assembly and a circumferential surface avoiding the large surface, and the side surface, and/or the circumferential surface is provided with weak parts. The wrapping shell is provided with a pressure relief part at least partially opposite to the weak parts, and the pressure relief part is formed on the first plate.

According to some embodiments of the present application, in projection along the first direction, a projection contour of the pouch battery cell is located within a range of a projection contour of the heat insulating member.

According to some embodiments of the present application, the heat insulating member is configured as one or more of a mica plate, a foam plate, and an aerogel plate.

According to some embodiments of the present application, the pouch battery cell is any one of a lithium iron phosphate battery cell, a ternary lithium battery cell, and a solid-state battery cell.

According to some embodiments of the present application, the battery cell is the lithium iron phosphate battery cell, and in a positive electrode material of the battery cell, an amount ratio of a positive electrode active material, a positive electrode binder, and a positive electrode conductive agent is 96:(1-3):(1-3); the battery cell is the ternary lithium battery cell, and in a positive electrode material of the battery cell, an amount ratio of a positive electrode active material, a positive binder, and a positive conductive agent is 96:(2-3):(1-2).

The present application provides an electric device, including: the battery apparatus according to the above embodiments.

According to some embodiments of the present application, the electric device is a vehicle.

According to some embodiments of the present application, the battery apparatus is integrated in the chassis of the vehicle, and the top plate of the case participates in defining the floor of the vehicle body.

The additional aspects and the advantages of the present application will be partially provided in the following description, will partially become apparent from the following description, or will be learned through the practice of the present application.

### BRIEF DESCRIPTION OF THE DRAWINGS

The above and/or additional aspects and advantages of the present application will become apparent and readily understood from the description of embodiments in conjunction with the accompanying drawings below, in which:
FIG. 1 is a schematic diagram of an electric device according to an embodiment of the present application;
FIG. 2 is a schematic diagram of a battery apparatus according to an embodiment of the present application;
FIG. 3 is a schematic diagram of a battery set and a heat insulating member (a heat insulating member is provided between each pair of adjacent battery sets) according to an embodiment of the present application;
FIG. 4 is a schematic diagram of a battery set according to an embodiment of the present application;
FIG. 5 is a schematic diagram of the cooperation between a battery set and a bottom plate according to an embodiment of the present application;
FIG. 6 is a schematic diagram of a pouch battery cell according to an embodiment of the present application;
FIG. 7 is a schematic diagram of a battery set and a heat insulating member (there is one heat insulating member) according to an embodiment of the present application; and
FIG. 8 is a schematic diagram of a battery set and a heat insulating member (one heat insulating member is arranged between every two battery sets) according to an embodiment of the present application.

### DETAILED DESCRIPTION

The embodiments of the present application are described in detail hereinafter, with examples of the embodiments illustrated in the drawings. Throughout the drawings, the same or similar reference numbers indicate the same or similar elements or elements having the same or similar functions. The embodiments described hereinafter with reference to the drawings are exemplary and are only intended to explain the present application. They should not be construed as limiting the scope of the present application.

In the description of the present application, it should be understood that the orientations or positional relationships indicated by the terms "central", "upper", "lower", "front", "rear", "left", "right", "vertical", "horizontal", "top", "bottom", "inner", "outer", and the like are those shown based on the drawing. These terms are only intended to facilitate the description of the present application and simplify the description rather than indicate or imply that the apparatus or element referred to must have a specific orientation or must be constructed and operated in a specific orientation, and thus, should not be construed as limiting the present application.

It should be noted that the terms "first" and "second" are used for descriptive purposes only and should not be construed as indicating or implying relative importance or implicitly indicating the number of technical features described. Therefore, features defined with "first" or "second" may explicitly or implicitly include one or more of the features. Further, in the description of the present application, unless otherwise specified, "a plurality" means two or more.

The pouch battery cell may be a secondary battery, which refers to a pouch battery cell that can continue to be used by activating the active material through charging after the pouch battery cell is discharged.

The pouch battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present application.

The battery apparatus described in the embodiments of the present application may include one or more battery sets for providing voltage and capacity. The battery set may include a plurality of pouch battery cells, and the plurality of pouch battery cells are connected in series, in parallel, or in series-parallel by a busbar member.

In some embodiments, the battery set is typically formed by arranging a plurality of pouch battery cells.

In some embodiments, the battery apparatus may be a battery pack. The battery pack includes a case and one or more battery sets, and the battery sets are accommodated in the case.

As an example, the battery set may be a battery module, and the battery set may be accommodated in the case by fixing the battery module in the case.

As an example, the case may include a first case body and a second case body. The first case body and the second case body are snap-fitted to form an enclosed space inside the case, so as to accommodate the battery set. The term "enclosed" here refers to be covered or closed, which may be sealed or unsealed. The first case body may be a top cover or a bottom plate.

As an example, the case may include a top cover, a frame, and a bottom plate. The top cover and the bottom plate are each connected to the frame, such that an enclosed space is formed inside the case to accommodate the battery set.

In some embodiments, the case may be a part of the chassis structure of the vehicle. For example, a part of the case may become at least a part of the floor of the vehicle, or a part of the case may become at least a part of a crossmember and a longitudinal member of the vehicle.

The technical solutions described in the embodiments of the present application are suitable for battery apparatuses and electric devices using battery apparatuses.

The electric device may be a vehicle, a mobile phone, a portable device, a laptop computer, a ship, a spacecraft, an electric toy, an electric tool, or the like. The vehicle may be a petrol or diesel vehicle, a natural gas vehicle, or a new energy vehicle, and the new energy vehicle may be a pure electric vehicle, a hybrid electric vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric devices described above are not specially limited in the embodiments of the present application.

For ease of explanation, the following embodiments will be described by taking a vehicle as an example of the electric device.

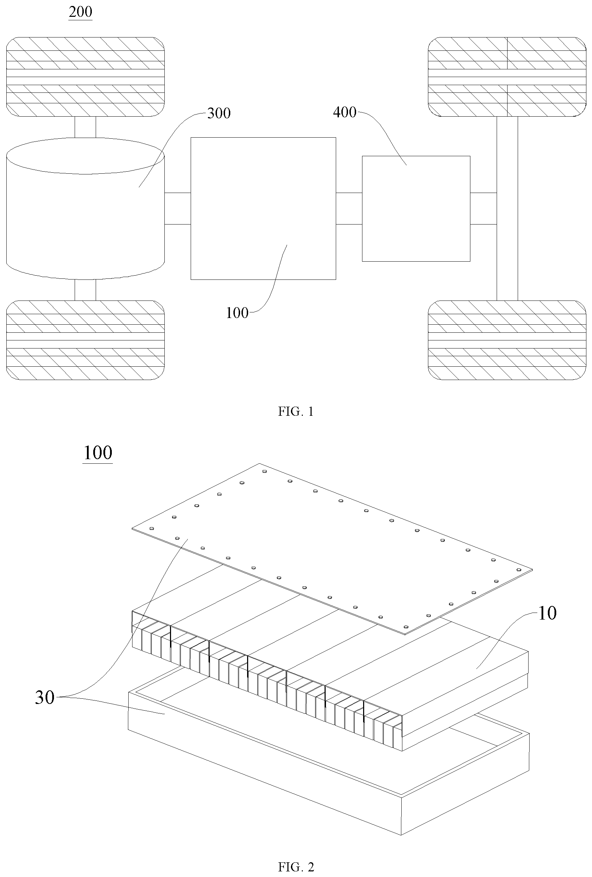

Referring to FIG. 1, FIG. 1 is a schematic structural diagram of a vehicle according to some embodiments of the present application. A battery apparatus 100 is arranged inside the vehicle, and the battery apparatus 100 may be arranged at the bottom, head, or tail of the vehicle. The battery apparatus 100 may be used for powering the vehicle. For example, the battery apparatus 100 may serve as an operation power source for the vehicle.

The vehicle may further include a controller 400 and a motor 300. The controller 400 is configured to control the battery apparatus 100 to power the motor 300, and the motor 300 is formed as a load, e.g., for operation power needed by the vehicle for start-up, navigation, and driving.

In some embodiments of the present application, the battery apparatus 100 may not only serve as the operation power source for the vehicle, but also as a driving power source for the vehicle to, instead of or in part instead of fuel or natural gas, provide driving power for the vehicle.

Referring to FIG. 2, FIG. 2 is an exploded view of a battery apparatus 100 according to some embodiments of the present application. The battery apparatus 100 includes a case 30, and the case 30 is configured to accommodate the pouch battery cells 12.

The case 30 is a component for accommodating the pouch battery cells 12, the case 30 provides a storage space for the battery set 10, and the case 30 may be of a variety of structures. In some embodiments, the case 30 may include a tray and a cover plate. The tray and the cover plate are lidded with each other to define the storage space for accommodating the pouch battery cells 12. The tray and cover plate may be in various shapes, such as rectangular parallelepiped shape and cylindrical shape. The tray may be of a hollow structure with one side open, the cover plate may also be of a hollow structure with one side open, and the open side of the tray is lidded with the open side of the cover plate to form the case 30 with a storage space. Alternatively, the tray may be of a hollow structure with one side open, the cover plate is of a plate-like structure, and the open side of the tray is lidded with the cover plate to form the case 30 with a storage space.

In the battery apparatus 100, one or more pouch battery cells 12 may be provided. A plurality of pouch battery cells 12 are loaded together through a wrapping shell 11 to form a battery set 10, and one or more battery sets 10 are loaded into the case 30. If a plurality of pouch battery cells 12 are provided, the plurality of pouch battery cells 12 may be connected in series, in parallel, or in series-parallel. The series-parallel connection means that both series connection and parallel connection are present for the connection among the plurality of pouch battery cells 12. The plurality of pouch battery cells 12 may be first connected in series, in parallel, or in series-parallel to form the battery set 10, and then a plurality of battery sets 10 are connected in series, in parallel, or in series-parallel to form a whole and accommodated in the case 30.

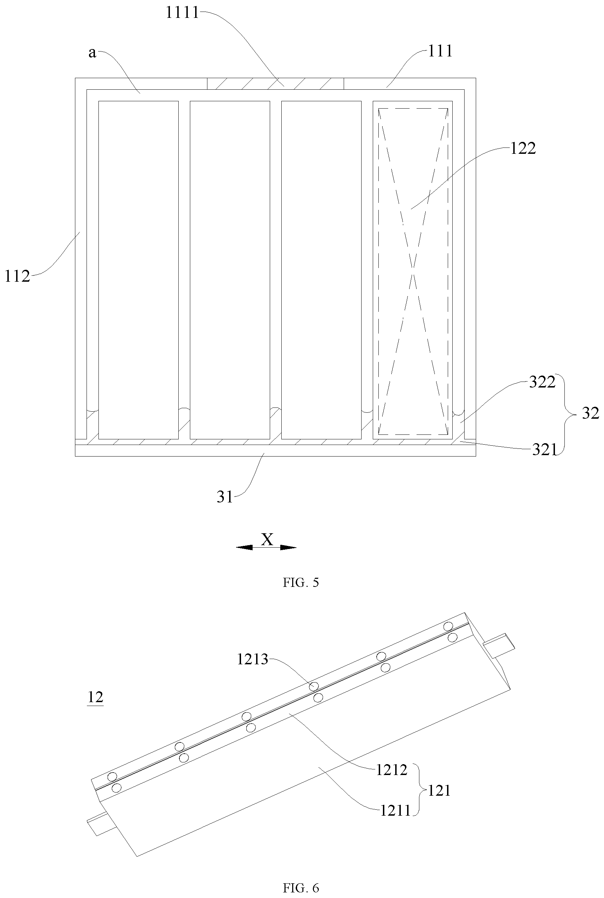

Referring to FIG. 6, the pouch battery cell 12 serves as the minimum energy unit of the battery apparatus 100. The pouch battery cell 12 includes a flexible shell 121 and an electrode assembly 122 disposed inside the flexible shell 121.

The internal environment formed by the flexible shell 121 may be used for accommodating the electrode assembly 122, the electrolytic solution, and other components. One side of the flexible shell 121 may form an opening for injecting the electrolytic solution and inserting the electrode assembly 122 into the shell.

As shown in FIG. 6, tabs of the electrode assembly 122 are provided in the flexible shell 121 in a penetrating manner, the tabs are electrically connected to the busbar member, and the electrode assembly 122 is a component of the pouch battery cell 12 in which the electrochemical reaction occurs. One or more electrode assemblies 122 may be accommodated within the flexible shell 121. The electrode assembly 122 is mainly formed by winding or laminating a positive electrode plate and a negative electrode plate, and a separation film is usually disposed between the positive electrode plate and the negative electrode plate. The portions of the positive electrode plate and the negative electrode plate that contain the active substance constitute the body part of the electrode assembly 122, and the portions of the positive electrode plate and the negative electrode plate that do not contain the active substance each constitute a tab. The positive electrode tab and the negative electrode tab may be disposed together at one end of the body part or separately disposed at two ends of the body part. During the charging and discharging processes of the battery apparatus 100, the positive electrode active substance and the negative electrode active substance react with the electrolytic solution, and the tabs are connected to the busbar members to form a current circuit.

A positive electrode plate may include a positive electrode current collector and a positive electrode film layer disposed on at least one surface of the positive electrode current collector, and the positive electrode film layer includes a positive electrode active material.

As an example, the positive electrode current collector has two surfaces opposite to each other in its own thickness direction, and the positive electrode film layer is disposed on any one or both of the two opposite surfaces of the positive electrode current collector.

As an example, the positive electrode current collector may be made of metal foil or composite current collector. For example, for the metal foil, stainless steel, copper, aluminum, nickel, carbon electrode, carbon, nickel, titanium, aluminum or stainless steel treated with silver on the surface, or the like may be used. The composite current collector may include a polymer material substrate and a metal layer. The composite current collector can be fabricated by forming a metal material (aluminum, aluminum alloy, nickel, nickel alloy, titanium, titanium alloy, silver and silver alloy, etc.) on a polymer material substrate (such as a substrate made of polypropylene, polyethylene terephthalate, polybutylene terephthalate, polystyrene, and polyethylene).

As an example, when the pouch battery cell 22 according to the embodiments of the present application is a lithium-ion battery, the positive electrode active material may include at least one of the following materials: a phosphate, a layered transition metal oxide, and their respective modified compounds. Optionally, the positive electrode active material may include layered transition metal oxides and their respective modified compounds, which is conducive to increasing the energy density of the pouch battery cell 22. However, the present application is not limited to these materials, and other traditional materials that can be used as positive electrode film layers for batteries may also be used. These positive electrode active materials may be used alone or in combination of two or more.

Examples of the phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

The layered transition metal oxide includes at least one of a compound with the general formula of LiₐNi_{b}Co_{c}M_{d}OₑA_{f} and a modified compound thereof, where 0.8 ≤ a ≤ 1.2, 0.3 ≤ b < 1, 0 < c < 1, 0 < d < 1, 1 ≤ e ≤ 2, 0 ≤ f ≤ 1, M includes at least one of Mn, Al, Zr, Zn, Cu, Cr, Mg, Fe, V, Ti, and B, and A includes at least one of N, F, S, and Cl. Optionally, 0.5 ≤ b < 1, and further optionally, 0.75 ≤ b ≤ 0.98.

Examples of the layered transition metal oxide may include, but are not limited to, at least one of a lithium cobalt oxide (such as LiCoO₂), a lithium nickel oxide (such as LiNiO₂), a lithium manganese oxide (such as LiMnO₂ and LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁), and LiNi_{0.9}Co_{0.05}Mn_{0.05}O₂ (also referred to as Ni90)), a lithium nickel cobalt aluminum oxide (such as LiNi_{0.80}Co_{0.15}Al_{0.05}O₂), and modified compounds thereof.

When the pouch battery cell 22 of the embodiments of the present application is a sodium-ion battery, the positive electrode active material may include, but is not limited to, at least one of a sodium-containing transition metal oxide, a polyanionic material (such as phosphate, fluorophosphate, pyrophosphate, and sulfate), and a Prussian blue material.

As an example, the positive electrode active material for use in the sodium-ion battery may include at least one of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue material, and a material with the general formula XₚM'_{q}(PO₄)ᵣOₓY₃₋ₓ. In the general formula XₚM'_{q}(PO₄)ᵣOₓY₃₋ₓ, 0 < p ≤ 4, 0 < q ≤2, 1 ≤ r ≤ 3, 0 ≤ x ≤ 2, where X includes at least one of H+, Li+, Na+, K+, and NH4+; M' is a transition metal cation, optionally at least one of V, Ti, Mn, Fe, Co, Ni, Cu, and Zn; and Y is a halogen anion, optionally at least one of F, Cl, and Br.

In the embodiments of the present application, the modified compounds of the above positive electrode active materials may be obtained by doping modification and/or surface-coating modification of the positive electrode active materials, such as carbon-coating modification, fast-ionic conductor coating modification, and the like.

The pouch battery cell 22, during the charging and discharging processes, undergoes deintercalation and consumption of active ions such as Li, and the molar content of Li varies when the pouch battery cell 22 is discharged to different states. In the examples of the positive electrode active material listed in the embodiments of the present application, the molar content of Li is in an initial state of the material, that is, a state before the material is added, and when the positive electrode active material is applied to a battery system, the molar content of Li may change after charge-discharge cycles.

In the examples of the positive electrode active material listed in the embodiments of the present application, the molar content of oxygen O is only a theoretical value. The molar content of oxygen O will vary due to oxygen release from the crystal lattice, and actually, the molar content of oxygen O will fluctuate.

In the embodiments of the present application, the content of the element in the positive electrode active material has the meaning known in the art and can be detected by using devices and methods known in the art. For example, with reference to EPA 6010D-2014, inductively coupled plasma atomic emission spectrometry is used to determine the content using a plasma atomic emission spectrometer (ICP-OES, model: Thermo ICAP7400). First, 0.4 g of positive electrode active material is taken and weighed out, and 10 ml (50% concentration) of aqua regia is added thereto. Then, the mixture is placed on a flat plate at 180 °C for 30 min. After digested on the flat plate, the mixture is adjusted to a volume of 100 mL and undergoes a quantitative test using a standard curve method.

In some embodiments, the positive electrode may be made of a foam metal. The foam metal may be foam nickel, foam copper, foam aluminum, foam alloy, foam carbon, or the like. When the foam metal is used as the positive electrode, the surface of the foam metal may be not provided with the positive electrode film layer. Certainly, the positive electrode film layer may also be provided. As an example, a lithium source material, a potassium metal, or sodium metal may also be incorporated into or/and deposited in the foam metal; the lithium source material is a lithium metal and/or a lithium-rich material.

In some embodiments, the positive electrode film layer further optionally includes a positive electrode conductive agent. The embodiments of the present application do not particularly limit the type of the positive electrode conductive agent. As an example, the positive electrode conductive agent includes at least one of superconducting carbon, conductive graphite, acetylene black, carbon black, Ketjen black, a carbon dot, a carbon nanotube, graphene, and a carbon nanofiber. In some embodiments, the mass percentage content of the positive electrode conductive agent in the positive electrode film layer is ≤ 5 wt%.

In some embodiments, the positive electrode film layer further optionally includes a positive electrode binder. The embodiments of the present application do not particularly limit the type of the positive electrode binder. As an example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin. In some embodiments, the mass percentage content of the positive electrode binder in the positive electrode film layer is ≤ 5 wt%.

The positive electrode film layer is generally formed by coating a positive electrode current collector with a positive electrode slurry, drying, and cold pressing. The positive electrode slurry is generally formed by dispersing the positive electrode active material, an optional conductive agent, an optional binder, and any other components in a solvent and stirring them uniformly. The solvent may be N-methylpyrrolidone (NMP), but is not limited thereto.

In some embodiments, the negative electrode may be a negative electrode plate. The negative electrode plate may include a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

As an example, the negative electrode current collector may be made of metal foil, foam metal, or composite current collector. For example, for the metal foil, aluminum or stainless steel treated with silver on the surface, stainless steel, copper, aluminum, nickel, carbon electrode, carbon, nickel, titanium, or the like may be used. The foam metal may be foam nickel, foam copper, foam aluminum, foam alloy, foam carbon, or the like. The composite current collector may include a polymer material substrate and a metal layer. The composite current collector may be fabricated by forming a metal material (copper, copper alloy, nickel, nickel alloy, titanium, titanium alloy, silver and silver alloy, etc.) on a polymer material substrate (such as a substrate made of polypropylene, polyethylene terephthalate, polybutylene terephthalate, polystyrene, and polyethylene).

As an example, a negative electrode active material for use in the pouch battery cell 22 known in the art may be used as the negative electrode active material. As an example, the negative electrode active material may include at least one of the following materials: a carbon material (e.g., at least one of artificial graphite, natural graphite, soft carbon, and hard carbon), a silicon-based material, a tin-based material, a lithium titanate, and the like. The silicon-based material may include at least one of elemental silicon, a silicon-oxygen compound, a silicon-carbon composite, a silicon-nitrogen composite, and a silicon alloy. The tin-based material may include at least one of elemental tin, a tin-oxygen compound, and a tin alloy. However, the present application is not limited to these materials, and other traditional materials that can be used as negative electrode film layers for batteries may also be used. These negative electrode film layers may be used alone or in combination of two or more.

In some embodiments, the negative electrode active material includes silicon element. The silicon element may be present in the form of a silicon-based material. For example, the silicon-based material may include at least one of elemental silicon, a silicon-oxygen compound, a silicon-carbon composite, a silicon-nitrogen composite, and a silicon alloy. Due to the introduction of the silicon element, the energy density of the pouch battery cell 22 can be improved.

In some embodiments, the mass content of the silicon element in the negative electrode film layer is 1 wt% to 32 wt%, optionally 2 wt% to 19 wt%, and further optionally 6 wt% to 13 wt%. Under the system of the pouch battery cell 22, when the mass content of the silicon element is within the above range, the energy density of the pouch battery cell 22 can be improved.

In the embodiments of the present application, the mass content of the silicon element in the negative electrode film layer has the meaning known in the art and can be detected by using devices and methods known in the art. For example, by soaking the negative electrode plate in a solvent such as water to separate the negative electrode active material from the negative electrode current collector, performing suction filtration to obtain the negative electrode active material, using the inductively coupled plasma optical emission spectrometer, with the model ICAP7400, of Thermo Fisher Scientific Inc., USA, to conduct detection on the negative electrode active material, and referring to the GB/T30902-2014 standard, the mass content of the silicon element can be obtained.

In some embodiments, the negative electrode film layer further optionally includes a negative electrode conductive agent. The embodiments of the present application do not particularly limit the type of the negative electrode conductive agent. As an example, the negative electrode conductive agent may include at least one of superconducting carbon, conductive graphite, acetylene black, carbon black, Ketjen black, a carbon dot, a carbon nanotube, graphene, and a carbon nanofiber. In some embodiments, the mass percentage content of the negative electrode conductive agent in the negative electrode film layer is ≤ 5 wt%.

In some embodiments, the negative electrode film layer further optionally includes a negative electrode binder. The embodiments of the present application do not particularly limit the type of the negative electrode binder. As an example, the negative electrode binder may include at least one of styrene-butadiene rubber (SBR), watersoluble unsaturated resin SR-1B, aqueous acrylic resin (e.g., polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS). In some embodiments, the mass percentage content of the negative electrode binder in the negative electrode film layer is ≤ 5%.

In some embodiments, the negative electrode film layer further optionally includes other auxiliary agents. As an example, other auxiliary agents may include thickeners, such as sodium carboxymethylcellulose (CMC-Na) and PTC thermistor materials. In some embodiments, the mass percentage content of the other auxiliary agents in the negative electrode film layer is ≤ 2 wt%.

In some embodiments, the material of the positive electrode current collector may be aluminum, and the material of the negative electrode current collector may be copper.

In some embodiments, the separator includes a separation film. The present application does not particularly limit the type of the separation film, and any porous-structure separation film known to have good chemical stability and mechanical stability may be selected and used.

The embodiments of the present application do not particularly limit the type of the separation film, and any porous-structure separation film known to have good chemical stability and mechanical stability may be selected and used.

In some embodiments, the material of the separation film may include one or more of glass fiber, nonwoven fabric, polyethylene, polypropylene, and polyvinylidene fluoride. The separation film may be a single-layer film or a multi-layer composite film, and there is no particular limitation on this. When the separation film is a multi-layer composite film, the materials of the layers may be the same or different, and there is no particular limitation on this.

In some embodiments, the separation film may include a porous base film and a coating disposed on at least one side of the porous base film, and the coating may include at least one of inorganic particles or organic particles.

The porous base film may include one or more of polyethylene and polypropylene.

The inorganic particles have relatively good heat resistance, and can improve the overall heat resistance of the separation film. When within the operating voltage range of the sodium-ion battery, the inorganic particles basically do not undergo oxidation reactions and reduction reactions with metal dendrites. In other words, the inorganic particles are configured to not undergo oxidation reactions and reduction reactions with the alkali metal and/or alkaline earth metal at a nominal voltage of the sodium-ion battery.

In some embodiments, the inorganic particles include one or more of boehmite γ-AlOOH, aluminum oxide Al₂O₃, aluminum hydroxide Al(OH)₃, barium sulfate BaSO₄, magnesium oxide MgO, magnesium hydroxide Mg(OH)₂, calcium oxide CaO, cerium oxide CeO₂, zirconium titanate SrTiO₃, barium titanate BaTiO₃, and magnesium fluoride MgF₂.

In some embodiments, the organic particles include at least one of polystyrene, polyethylene, polyimide, melamine resin, phenolic resin, polypropylene, polyesters (e.g., polyethylene terephthalate, polyethylene naphthalate, and polybutylene terephthalate), polyphenylene sulfide, polyaramide, polyamide-imide, polyimide, a copolymer of butyl acrylate and ethyl methacrylate, and a mixture thereof.

In some embodiments, the pouch battery cell 22 further includes an electrolytic solution.

During the charging and discharging processes of the battery cell, active ions are intercalated and deintercalated back and forth between the positive electrode plate and the negative electrode plate, and the electrolytic solution serves to conduct the active ions between the positive electrode plate and the negative electrode plate. The embodiments of the present application do not particularly limit the type of the electrolytic solution, which can be selected based on actual needs.

The electrolytic solution includes an electrolyte salt and a solvent. The types of the electrolyte salt and the solvent are not particularly limited, which can be selected based on actual needs.

In some embodiments, the electrolytic solution further optionally includes an additive. For example, the additive may include a negative electrode film-forming additive, or may include a positive electrode film-forming additive, or may include an additive capable of improving certain properties of the battery, such as an additive for improving the overcharge performance of the battery, an additive for improving the high-temperature performance of the battery, or an additive for improving the low-temperature power performance of the battery.

For example, the additive includes at least one of a cyclic carbonate compound containing unsaturated bonds, a sulfate ester compound, a sulfite ester compound, a sultone compound, a disulfonic acid compound, a nitrile compound, an aromatic compound, an isocyanate compound, a phosphazene compound, an acid anhydride, a cyclic acid anhydride compound, a phosphite ester compound, a phosphate ester compound, a borate ester, and a carboxylate ester compound.

In the related art, the wrapping shell 11 is disposed outside the plurality of pouch battery cells 12 and configured to support the pouch battery cells 12. The plurality of battery sets 10 are sequentially arranged in the length direction and/or the width direction of the battery apparatus 100, and the spacing between the adjacent battery sets 10 is small, such that the thermal diffusion speed between the adjacent battery sets 10 is relatively fast, which poses a safety hazard.

Based on this, the present application provides a battery apparatus 100. By arranging the heat insulating member 20 between the adjacent battery sets 10, the isolation and protection between adjacent battery sets 10 are achieved, such that the spread speed of thermal runaway between the adjacent battery sets 10 is reduced, thus improving the reliability of the battery apparatus 100.

The battery apparatus 100 and the electric device 200 according to the embodiments of the present application are described below with reference to FIGs. 1 to 8.

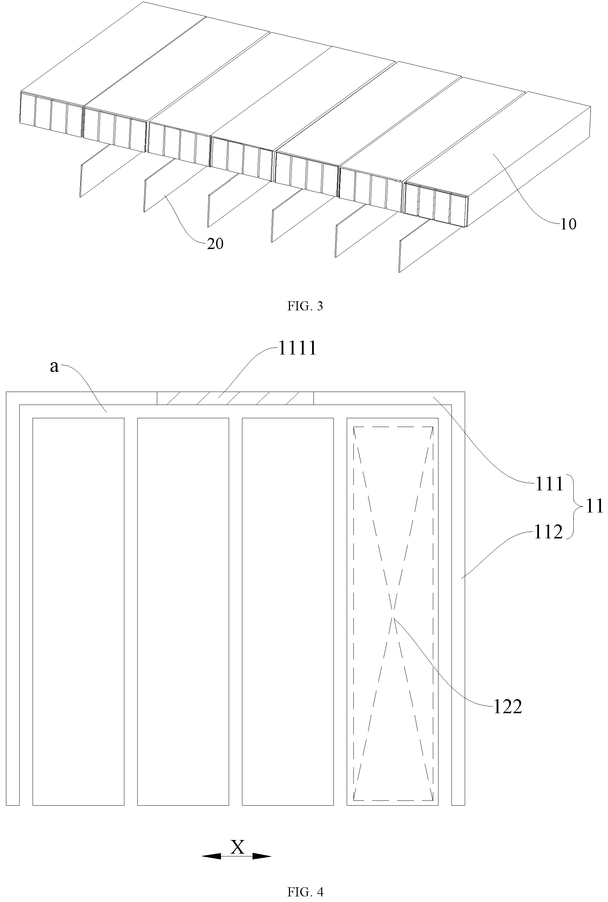

As shown in FIGs. 2 and 3, the present application provides a battery apparatus 100, including: a plurality of battery sets 10, where the battery sets 10 are sequentially arranged along a first direction, the battery sets 10 include a wrapping shell 11 and at least one pouch battery cell 12, the pouch battery cell 12 is disposed inside the wrapping shell 11, and among the plurality of battery sets 10, a heat insulating member 20 is provided between at least two adjacent battery sets 10.

The plurality of battery sets 10 may be sequentially arranged inside the case 30 along the first direction, where the first direction may be the length direction of the battery apparatus 100, or the first direction may also be the width direction of the battery apparatus 100. The heat insulating member 20 is provided between at least two adjacent battery sets 10. Through the arrangement of the heat insulating member 20, the heat transfer between the two adjacent battery cells can be blocked by the heat insulating member 20, and meanwhile, the high-pressure gas-fire flow (the high-pressure gas flow generated by the pouch battery cell 12 due to thermal runaway, which carries solid particles or liquid substances, is defined as a high-pressure gas and fire flow) can be buffered through the heat insulating member 20, such that the spread speed of thermal runaway between adjacent battery sets 10 is reduced.

The arrangement of the heat insulating member 20 between at least two adjacent battery sets 10 means that in the first direction, there are three battery sets 10, which are respectively defined as the first group, the second group, and the third group, and thus the heat insulating member 20 is provided at least between the first group and the second group, or between the second group and the third group, or the heat insulating members 20 are provided between the first group and the second group, and between the second group and the third group.

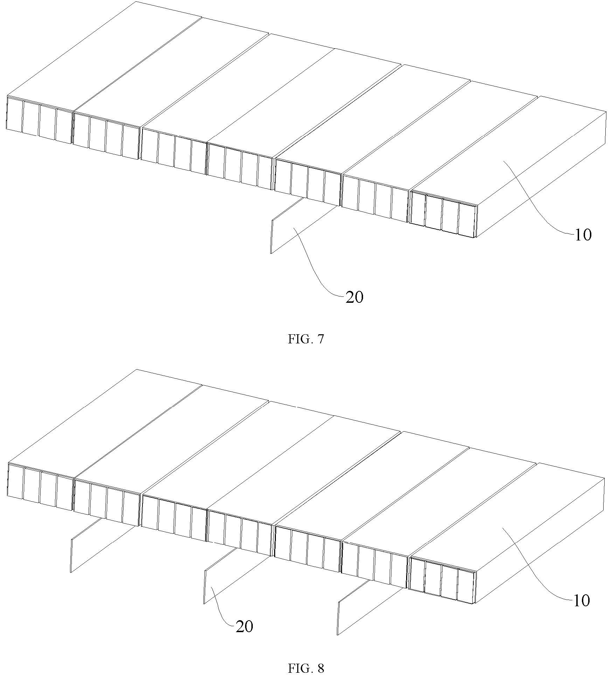

As shown in FIG. 7, in some embodiments, one heat insulating member 20 may be provided inside the battery apparatus 100, and the heat insulating member 20 may be disposed between any two adjacent battery sets 10 in the arrangement direction of the plurality of battery sets 10 disposed in sequence. As shown in FIGs. 3 and 8, in some other embodiments, a plurality of heat insulating members 20 may be provided inside the battery apparatus 100, and one battery set 10 (see FIG. 3) or two battery sets 10 (see FIG. 8) may be disposed between adjacent heat insulating members 20. Certainly, more battery sets may also be disposed between adjacent heat insulating members, which will not be described in detail herein.

According to the battery apparatus 100 of the embodiments of the present application, by arranging the heat insulating member 20 between at least two adjacent battery sets 10, the heat transfer among the plurality of battery sets 10 can be improved, and the high-pressure gas-fire flow can be buffered through the heat insulating member 20, such that the spread speed of thermal runaway among the battery sets 10 can be reduced, thus improving the reliability of the battery apparatus 100.

In a further embodiment of the present application, as shown in FIG. 3, the heat insulating member 20 is provided between each pair of adjacent battery sets 10. Compared to the arrangement of the heat insulating member 20 between at least two adjacent battery sets 10, more heat insulating members 20 are provided, such that heat insulation can be achieved between each pair of adjacent battery sets 10, and the heat insulation, buffer effect, and protection effect are better, which can further improve the reliability of the battery apparatus 100.

According to some embodiments of the present application, the heat insulating member 20 is configured as any one of a nano-heat insulating material member, a glass fiber heat insulating material member, and a ceramic fiber heat insulating material member.

That is, in some embodiments, the heat insulating member 20 is configured as a nano-heat insulating material member (a heat insulating material with nano-sized pores), such as nano-alumina, nano-silica, and nano-titania, which can be fabricated by processes such as sol-gel process, vapor deposition, and combustion. In some other embodiments, the heat insulating member 20 is configured as a glass fiber heat insulating material member, which is made from pyrophyllite, quartz sand, limestone, dolomite, borocalcite, and boromagnesite through processes such as high-temperature melting, wire drawing, winding, and weaving. In some other embodiments, the heat insulating member is configured as a ceramic fiber heat insulating material member, which is fabricated by melting high-purity clay clinker, alumina powder, silica powder, and other raw materials in an industrial electric furnace at a high temperature.

Thus, the heat insulating member 20 is configured as any one of the heat insulating material members described above while enabling the heat insulating member 20 to have stable and reliable heat insulation effects, the stable and reliable heat insulation effects can be achieved by using a heat insulating member 20 with a smaller thickness, thereby balancing the energy density of the battery apparatus 100.

According to some embodiments of the present application, the pouch battery cell 12 is configured as a lithium iron phosphate battery; and
when the total energy capacity within any two adjacent battery sets 10 is less than 0.5 KWh, the heat insulating member 20 is not provided between the two adjacent battery sets 10;
when the total energy capacity within the battery set 10 is less than or equal to 1 KWh and greater than or equal to 0.5 KWh, the heat insulating member 20 is provided between the battery set 10 and the battery set 10 adjacent thereto, and the thickness of the heat insulating member 20 is 1 mm to 2 mm;
when the total energy capacity within the battery set 10 is greater than 1 KWh, the heat insulating member 20 is provided between the battery set 10 and the battery set 10 adjacent thereto, and the thickness of the heat insulating member 20 is 2 mm to 3 mm.

Specifically, in the embodiments where the pouch battery cell 12 is configured as the lithium iron phosphate battery, and the total energy capacity within the battery set 10 is less than 0.5 KWh, the heat insulating members 20 is not required to be provided between the adjacent battery sets 10, such that the reliability of the battery apparatus 100 is ensured while reducing the number of the heat insulating members 20, thus reducing the material cost and improving the energy density. In the embodiments where the pouch battery cell 12 is configured as the lithium iron phosphate battery, and the total energy capacity within the battery set 10 is less than or equal to 1 KWh and greater than or equal to 0.5 KWh, the heat insulating member 20 with the thickness of 1 mm to 2 mm is required to be provided between the adjacent battery sets 10, which can balance the reliability and energy density of the battery apparatus 100. Similarly, in the embodiments where the pouch battery cell 12 is configured as the lithium iron phosphate battery, and the total energy capacity within the battery set 10 is greater than 1 KWh, the heat insulating member 20 with the thickness of 2 mm to 3 mm is required to be provided between the adjacent battery sets 10, such that the thickness of the heat insulating member 20 is more reasonable, thus balancing the energy density of the battery apparatus 100.

According to some other embodiments of the present application, the pouch battery cell 12 is configured as a ternary lithium battery; and
when the total energy capacity within any two adjacent battery sets 10 is less than 0.5 KWh, the heat insulating member 20 is not provided between the two adjacent battery sets 10;
when the total energy capacity within the battery set 10 is less than or equal to 1 KWh and greater than or equal to 0.5 KWh, the heat insulating member 20 is provided between the battery set 10 and the battery set 10 adjacent thereto, and the thickness of the heat insulating member 20 is 2 mm to 3 mm;
when the total energy capacity within the battery set 10 is greater than 1 KWh, the heat insulating member 20 is provided between the battery set 10 and the battery set 10 adjacent thereto, and the thickness of the heat insulating member 20 is 3 mm to 4 mm.

Specifically, in the embodiments where the pouch battery cell 12 is configured as the ternary lithium battery, and the total energy capacity within the battery set 10 is less than 0.5 KWh, the heat insulating member 20 is not required to be provided between the adjacent battery sets 10, and the reliability of the battery apparatus 100 is ensured while reducing the number of the heat insulating members 20, thus reducing the material cost and improving the energy density. In the embodiments where the pouch battery cell 12 is configured as the ternary lithium battery, and the total energy capacity within the battery set 10 is less than or equal to 1 KWh and greater than or equal to 0.5 KWh, the heat insulating member 20 with the thickness of 2 mm to 3 mm is required to be provided between the adjacent battery sets 10, which can balance the reliability and energy density of the battery apparatus 100. Similarly, in the embodiments where the pouch battery cell 12 is configured as the ternary lithium battery, and the total energy capacity within the battery set 10 is greater than 1 KWh, the heat insulating member 20 with the thickness of 3 mm to 4 mm is required to be provided between the adjacent battery sets 10, such that the thickness of the heat insulating member 20 is more reasonable, thus balancing the energy density of the battery apparatus 100.

| Type of battery | Energy capacity (KWh) | Thickness of heat insulating member 20 (mm) |
|---|---|---|
| Lithium iron phosphate (LFP) | Less than or equal to 0.5 | No heat insulating member 20 |
| Lithium iron phosphate (LFP) | Greater than or equal to 0.5 and less than or equal to 1 | 1-2 |
| Lithium iron phosphate (LFP) | Greater than 1 | 2-3 |
| Ternary lithium (NCM) | Less than or equal to 0.5 | No heat insulating member 20 |
| Ternary lithium (NCM) | Greater than or equal to 0.5 and less than or equal to 1 | 2-3 |
| Ternary lithium (NCM) | Greater than 1 | 3-4 |

In other words, compared to the traditional square-shell battery cell, the pack efficiency of the pouch battery cell 12 is higher and the energy density in a single battery set 10 is higher, but along with the increase in the number of the pouch battery cells 12 inside the battery set 10, it is difficult to achieve heat insulation between adjacent battery sets 10 through the wrapping shell 11 only. Therefore, the heat insulating member 20 is further provided between the adjacent battery sets 10. However, for the pouch battery cells 12 of different systems, the heat generation during thermal runaway in the battery cells is different. For example, under the lithium iron phosphate battery system, the heat generation during thermal runaway in the pouch battery cells 12 is relatively low, while under the ternary lithium battery system, the heat generation during thermal runaway in the pouch battery cells 12 is relatively large. Therefore, under the same energy capacity, the thickness of the heat insulating member 20 between the battery sets 10 under the ternary lithium battery system is set to be relatively thick, while the thickness of the heat insulating member 20 between the battery sets 10 under the lithium iron phosphate battery system is set to be relatively thin. In addition, under the unified battery system, as the energy capacity increases, the thickness of the heat insulating member 20 is increased appropriately, but does not exceed an upper limit value. For example, the upper limit value of the lithium iron phosphate battery is 3 mm, and the upper limit value of the ternary lithium battery is 4 mm.

It should be noted that two groups of battery sets 10 may be disposed in a closed space of the case of a simulated battery apparatus, the internal energy capacity of the two groups of battery sets 10 are the same, and one of the two groups of battery sets 10 is caused to undergo thermal runaway (for example, thermal runaway is triggered by short circuit), while the other group is the battery set 10 in a normal state. The heat insulating member 20 is not provided between two adjacent battery sets 10, or the heat insulating members 20 with different thickness dimensions are sequentially provided. In addition, an allowable duration threshold is set between two adjacent battery sets 10, which represents the permissible time for thermal runaway of one battery set 10 to induce thermal runaway in the other battery set 10. For example, according to the national standard GB 38031, the battery apparatus 100 is required not to catch fire within five minutes after a battery cell undergoes thermal runaway. Based on this, the allowable duration threshold may be set to 5 minutes. Subsequently, the time taken for the battery set 10 in a normal state to undergo thermal runaway due to the propagation of thermal runaway from the adjacent battery set 10 is measured to determine whether the time reaches or exceeds the allowable duration threshold, such that the thermal protection effectiveness between adjacent battery sets 10 is determined. This enables the assessment of whether the heat insulating member 20 is required to be provided between battery sets 10 with different energy capacities. If the heat insulating member 20 is required, further testing is conducted to determine the thickness dimensions of the heat insulating member 20.

Referring to the following table, the following table illustrates a comparison table of the heat insulation effect with respect to battery cells of different energy systems but having the same specifications and dimensions, individual battery cell sets 10 with varying total energy capacities, and heat insulating members 20 with varying thicknesses between adjacent battery sets 10.

| Battery system | Energy capacity (KWh) | Thickness of heat insulating member 20 | Protection effect |
|---|---|---|---|
| Lithium iron phosphate | 0.3 | No heat insulation pad | Excellent |
| Lithium iron phosphate | 0.5 | No heat insulation pad | Relatively poor |
| Lithium iron phosphate | 0.7 | 0.5 | Extremely poor |
| Lithium iron phosphate | 0.9 | 1 | Good |
| Lithium iron phosphate | 1.2 | 1.2 | Extremely poor |
| Lithium iron phosphate | 1.4 | 2 | Good |
| Ternary lithium | 0.3 | No heat insulation pad | Good |
| Ternary lithium | 0.6 | 1 | Relatively poor |
| Ternary lithium | 0.8 | 2 | Good |
| Ternary lithium | 1 | 2.5 | Extremely poor |
| Ternary lithium | 1.2 | 3 | Good |
| Ternary lithium | 1.5 | 3.2 | Good |

It should be noted that the test condition is as follows: the heat insulating member 20 is disposed between two adjacent battery sets 10, two battery sets 10 with the same energy capacity (e.g., 0.5 KWh, 1 KWh, etc.) are selected and used, one of the battery sets 10 is caused to undergo thermal runaway, and the other battery set 10 does not undergo thermal runaway; the heat insulating member 20 is provided between the two battery sets 10 or the heat insulating member 20 is not provided (e.g., measuring the thermal runaway duration under conditions where the total energy capacity is 1.4 KWh, the battery cells are lithium iron phosphate battery cells, and the thickness of the heat insulating member is 1.2 mm), and the thermal runaway duration of the other battery set 10 is measured. In addition, the protection effect is defined based on the allowable duration threshold. For example, if the thermal runaway duration exceeds the allowable duration threshold by 1 minute, the protection effect is defined as excellent; if the thermal runaway duration is equal to the allowable duration threshold, the protection effect is defined as good; if the thermal runaway duration is less than the allowable duration threshold by 1 minute, the protection effect is defined as relatively poor; if the thermal runaway duration is less than the allowable duration threshold by 2 minutes, the protection effect is defined as extremely poor; and both the "relatively poor" and "extremely poor" represent failing protection effect.

It can be seen from the table that in the embodiments where the pouch battery cell 12 is configured as the lithium iron phosphate battery cell, when the total energy capacity is not more than 0.5 KWh, the heat insulating member 20 is not required to be provided; when the total energy capacity is within the range of 0.5 KWh to 1 KWh, by providing a heat insulating member 20 with a thickness ranging from 1 mm to 2 mm, a relatively good protection effect can be achieved; and when the total energy capacity is greater than 1 KWh, the heat insulating member 20 with a thickness greater than 2 mm is required to be provided. In the embodiments where the pouch battery cell 12 is configured as the ternary lithium battery cell, when the total energy capacity is not more than 0.5 KWh, the heat insulating member 20 is not required to be disposed; when the total energy capacity is within the range of 0.5 KWh to 1 KWh, a heat insulating member 20 with a thickness ranging from 1 mm to 3 mm is required to be provided, and thus a relatively good protection effect can be achieved; and when the total energy capacity is greater than 1 KWh, the heat insulating member 20 with a thickness of greater than 3 mm is required to be provided.

That is, as the total energy capacity increases, the thickness of the heat insulating member 20 should be correspondingly increased.

In this way, in one aspect, different thicknesses of the heat insulating member 20 may be set for battery cells of different energy systems, thereby enhancing the reliability of the battery apparatus 100 under different energy systems. In another aspect, for the battery cells of the same energy system, as the energy capacity within the battery set 10 increases, the thickness of the heat insulating member 20 is increased accordingly, which can improve the stability of the heat insulating member 20, thus ensuring the reliability of the battery apparatus 100. Moreover, the thickness of the heat insulating member 20 can be set reasonably to balance the energy density of the battery apparatus 100.

As shown in FIG. 2, the present application provides a battery apparatus 100, including: a case 30 and a battery set 10, and at least one battery set 10 is provided. The battery set 10 includes: the pouch battery cell 12 and the wrapping shell 11 according to at least one of the embodiments described above, and at least one side surface of the wrapping shell 11 is provided with a pressure relief part 1111.

An accommodating space is formed in the case 30, one or more battery sets 10 are disposed in the accommodating space, one or more pouch battery cells 12 are disposed inside the wrapping shell 11 of each battery set 10, and the pouch battery cell 12 is configured as the above pouch battery cell 12 with the flexible shell 121.

The wrapping shell 11 is at least configured to wrap at least one of a plurality of circumferential surfaces 1212 as well as two side surfaces 1211, of the pouch battery cell 12, the weak parts 1213 are disposed on at least one circumferential surface 1212 of the pouch battery cell 12, and the pressure relief part 1111 is formed on at least one side representation of the wrapping shell 11; for example, the pressure relief part 1111 is opposite to the weak parts 1213, or the pressure relief part 1111 is disposed on the first surface of the wrapping shell 11, the weak parts 1213 are opposite to the second surface of the wrapping shell 11, and the first surface is adjacent to the second surface.

According to the battery apparatus 100 of the embodiments of the present application, by providing the pressure relief part 1111 cooperating with the weak parts 1213 on the wrapping shell 11, when thermal runaway occurs in the pouch battery cell 12, the high-temperature gas-fire flow discharged via the weak parts 1213 can be further released outwards through the pressure relief part 1111, such that the directional discharge of the high-temperature gas-fire flow is achieved through the cooperation between the weak parts 1213 and the pressure relief part 1111, thereby improving the reliability of the battery apparatus 100.

According to some embodiments of the present application, the wrapping shell 11 includes a first plate 111 and second plates 112 disposed on both sides of the first plate 111. The pressure relief part 1111 is formed on the first plate 111, and the weak parts 1213 are at least partially opposite to the pressure relief part 1111.

The first plate 111 and the second plates 112 disposed on both sides of the first plate 111 define a substantially U-shaped wrapping shell 11, such that the first plate 111 of the wrapping shell 11 may be opposite to one circumferential surface 1212 of the pouch battery cell 12, the two second plates 112 may be respectively opposite to two side surfaces 1211 of the pouch battery cell 12, and the weak parts 1213 formed on the circumferential surface 1212 may be at least partially opposite to the pressure relief part 1111 formed on the first plate 111.

The weak part 1213 being at least partially opposite to the pressure relief part 1111 means that the weak part 1213 formed on the circumferential surface 1212 is projected toward the first plate 111, and the projection contour at least partially overlaps the contour of the pressure relief part 1111.

In this way, in one aspect, the gas-fire flow generated after thermal runaway of the pouch battery cell 12 can be discharged directionally and orderly, so as to reduce the damage, especially secondary damage; in another aspect, the shorter communicating path between the weak part 1213 and the pressure relief part 1111 enables fast discharge, shorter retention duration of the gas-fire flow inside the wrapping shell 11, and less influence to other pouch battery cells 12 around the pouch battery cell 12 with thermal runaway, thereby further slowing down the speed of thermal runaway spreading, and providing the reliability of the battery set 10 and the battery apparatus 100.

According to some embodiments of the present application, the second plate 112 is opposite to the side surface 1211, and the area of the projection contour of the second plate 112 on the side surface 1211 of the flexible shell 121 is smaller than or equal to the area of the side surface 1211.

The circumferential surface 1212 is defined to include a first surface and a second surface opposite to the first surface. The first surface is opposite to the first plate 111, the second surface is disposed to be away from the first plate 111, the second surface is configured to connect to the case 30, the two sides of the first surface and the second surface are respectively two side surfaces 1211 of the pouch battery cell 12, the two ends of the first surface and the second surface are respectively the other two circumferential surfaces 1212 of the pouch battery cell 12, and the second plate 112 is opposite to the side surface 1211, so as to limit the pouch battery cell 12 in the direction of the second plate 112. The area of the surface of the second plate 112 opposite to the side surface 1211 may be less than or equal to the area of the side surface 1211.

In some embodiments, the dimension of the second plate 112 is the same as the dimension of the side surface 1211; in some other embodiments, the dimension of the second plate 112 is smaller than the dimension of the side surface 1211. In one aspect, this configuration can prevent the case that the second surface cannot be connected to the case 30 due to excessively large dimension of the second plate 112, thereby improving the fixing stability and reliability of the battery set 10 in the case 30; in other aspect, the material consumption of the second plate 112 can be less, which can also reduce the material cost of the battery set 10 and the battery apparatus 100.

As shown in FIGs. 4 and 5, according to some embodiments of the present application, the wrapping shell 11 includes: the first plate 111 and the second plates 112 disposed on both sides of the first plate 111 in the first direction. The second plates 112 are opposite to the pouch battery cell 12 in the first direction, and the heat insulating member 20 is connected to the second plates 112.

The second plate 112 is configured to connect to the heat insulating member 20, such that the heat insulating member 20 may be opposite to the side surface 1211 of the pouch battery cell 12, thus enabling the area of the region of the heat insulating member 20 opposite to the pouch battery cell 12 to be greater and further enhancing the heat insulation effect of the heat insulating member 20.

The end surfaces, away from the first plate 111, of the second plates 112 are connected to a bottom plate 31 through an adhesive layer 32, which can also improve the connecting strength between the wrapping shell 11 and the case 30; and the heat on the wrapping shell 11 can also be transferred to the cold plate through the adhesive layer 32, which can improve the heat dissipation efficiency and heat dissipation effect of the battery sets 10.

As shown in FIGs. 3 and 4, according to some embodiments of the present application, one end, facing away from the first plate 111, of the second plates 112 forms an opening, and the wrapping shell 11 is connected to the case 30 of the battery apparatus 100 through the position of the opening.

The bottom plate 31 of the case 30 is connected to the second surface of the pouch battery cell 12 through the adhesive layer 32, and the end surfaces, away from the first plate 111, of the second plate 112 are simultaneously connected to the bottom plate 31, thereby fixing the battery sets 10 on the case 30 and improving the fixing stability and reliability of battery sets 10.

Certainly, in some embodiments, the adhesive layer 32 is also configured to connect and fix the bottom plate 31 and the second plate 112.

As shown FIG. 5, according to some embodiments of the present application, the bottom plate 31 includes a cold plate, and the adhesive layer 32 is located between the cold plate and the plurality of pouch battery cells 12.

In some embodiments, the bottom plate 31 of the case 30 is formed as the cold plate, and the cold plate is connected to the pouch battery cell 12 through the adhesive layer 32. In some other embodiments, the cold plate is disposed between the bottom plate 31 and the pouch battery cell 12, and the cold plate is connected to the pouch battery cell 12 through the adhesive layer 32.

The adhesive layer 32 is configured as a structural adhesive, and the bottom plate 31 provided with the cold plate is connected to the pouch battery cell 12. On the premise that the battery set 10 is stably and reliably fixed in the case 30, the temperature of the battery set 10 may be adjusted through the cold plate, such that the battery set 10 can operate at a proper temperature, thereby improving the operating stability and reliability of the battery set 10 and reducing the probability of overheating of the battery set 10 and thereby reducing the probability of thermal runaway in the battery set 10, and enhancing the reliability of the battery set 10 and even the battery apparatus 100.

As shown in FIG. 5, according to some embodiments of the present application, the adhesive layer 32 includes: an adhesive layer body 321 and an adhesive overflow part 322. The adhesive overflow part 322 is located on one side, facing the plurality of pouch battery cells 12, of the adhesive layer body 321, and is located between adjacent pouch battery cells 12, and/or between the pouch battery cell 12 and the second plate 112.

When the structural adhesive is used to fix and connect the pouch battery cell 12 and the cold plate, at least a part of the adhesive layer 32 overflows into the space between the adjacent pouch battery cells 12, and/or between the second plate 112 and the pouch battery cell 12, and is formed as the adhesive overflow part 322. The arrangement of the adhesive overflow part 322 not only can increase the areas between the adhesive layer 32 and the pouch battery cell 12, and between the adhesive layer 32 and the second plate 112, so as to improve the fixing stability and reliability of the battery set 10 on the case 30, but also can limit the pouch battery cells 12 and the wrapping shell 11 by filling the gaps between the adjacent pouch battery cells 12 and between the pouch battery cell 12 and the second plate 112 with the adhesive overflow part 322, thus reducing the movement of the battery set 10 in the case 30, and reducing the movement of the pouch battery cells 12 in the wrapping shell 11.

According to some embodiments of the present application, in projection along the first direction, a projection contour of the pouch battery cell 12 is located within a range of a projection contour of the heat insulating member 20.

The contour dimension of the heat insulating member 20 is greater than or equal to the contour dimension of the pouch battery cell 12, so as to improve the heat insulation effect of the heat insulating member 20.

As shown in FIGs. 4 and 5, according to some embodiments of the present application, the first plate 111 is spaced apart from a side of the circumferential surface 1212 provided with the weak parts 1213 to define an exhaust channel a.

In this way, the high-temperature gas-fire flow generated after the rupture of the weak parts 1213 can be firstly released to the exhaust channel a, and then discharged through the pressure relief part 1111 after being primarily buffered through the exhaust channel a. This can lower the pressure of the high-temperature gas-fire flow after flowing out of the pressure relief part 1111 and thereby reduce the impact on and damage to the pouch battery cell 12 after thermal runaway.

According to some embodiments of the present application, the first plate 111 is configured as a flat plate or an arc-shaped plate.

In some embodiments, the first plate 111 is configured as a flat plate, and in some other embodiments, the first plate 111 is configured as an arc-shaped plate.

According to some embodiments of the present application, a plurality of pressure relief parts 1111 are provided, and the plurality of pressure relief parts 1111 are spaced apart from each other in the length direction and/or the width direction of the first plate 111.

Therefore, the plurality of weak parts 1213 on each pouch battery 12 can each be provided with a corresponding pressure relief part 1111, such that the high-temperature gas-fire flow buffered through the exhaust channel a can be directly discharged through the corresponding relief part 1111, thereby increasing the discharging speed, and reducing the retention duration of the high-temperature gas-fire flow in the exhaust channel a during the discharging process, slowing down the spread speed of thermal runaway between adjacent pouch battery cells 12 in the battery sets 10, and improving the reliability of the battery sets 10.

According to some embodiments of the present application, the wrapping shell 11 is configured as an aluminum shell or a stainless steel shell.

In some embodiments, the wrapping shell 11 is configured as the aluminum shell, and in some other embodiments, the wrapping shell 11 is configured as the stainless steel shell, such that the temperature resistance, the structural strength, and the like of the wrapping shell 11 are significantly higher than those of a flexible housing. By using the wrapping shell 11 with certain structural strength and rigidity to support and protect the pouch battery cell 12 outside the pouch battery cell 12, the structural strength of the battery sets 10 can be improved, and the spread speed of thermal runaway between adjacent battery sets 10 is reduced, thus improving the reliability of the battery apparatus 100.

As shown in the drawings, the pouch battery cell 12 in the embodiments of the present application is configured as the pouch battery cell 12, the electrode assembly 122 is disposed inside the flexible shell 121, and the weak parts 1213 are formed on at least the circumferential surface 1212 of the flexible shell 121; the battery set 10 includes at least one pouch battery cell 12 according to the embodiments of the present application, the pressure relief part 1111 on the first plate 111 of the wrapping shell 11 is at least partially opposite to the weak parts 1213, and the second plate 112 is opposite to the side surface 1211 of the flexible shell 121; the bottom plate 31 of the case 30 is configured as the cold plate, or the cold plate is disposed above the bottom plate 31, the cold plate is connected to the pouch battery cell 12 through the adhesive layer 32, and the adhesive overflow part 322 of the adhesive layer 32 overflows into the space between the adjacent pouch battery cells 12, and/or between the pouch battery cell 12 and the second plate 112; the heat insulating member 20 is disposed between adjacent battery sets 10, the heat insulating member 20 is connected to at least one of the bottom plate 31 and the top plate of the case 30, and the heat insulating member 20 and the second plate 112 may also be fixed by a structural adhesive, a screw joint structure, a snap-fitting structure, or the like.

According to some embodiments of the present application, the pouch battery cell 12 is any one of a lithium iron phosphate battery cell, a ternary lithium battery cell, and a solid-state battery cell.

That is, in some embodiments, the pouch battery cell 12 is configured as the lithium iron phosphate battery; in some embodiments, the pouch battery cell 12 is configured as the ternary lithium battery cell; and in some embodiments, the pouch battery cell 12 is configured as the solid-state battery cell.

The solid-state battery cell may be, but is not limited to, a polymer solid-state battery cell, an oxide solid-state battery cell, a sulfide solid-state battery cell, a halide solid-state battery cell, and the like. The solid-state battery cell may also be a semi-solid-state battery cell or an all-solid-state battery cell.

In the above technical solution, in the embodiments of the present application where the pouch battery cell is configured as the lithium iron phosphate battery cell, the reliability of the pouch battery cell can be improved, and the cycle life of the pouch battery cell can be extended. In the embodiments of the present application where the pouch battery cell is configured as the ternary lithium battery cell, the energy density and endurance mileage of the pouch battery cell can be increased. In the embodiments of the present application where the pouch battery cell is configured as the solid-state pouch battery cell, the energy density can be improved, and the reliability can be enhanced as well.

According to some embodiments of the present application, when the pouch battery cell 22 is the lithium iron phosphate (LiFeO₄) battery cell, in the positive electrode material of the pouch battery cell 22, the amount ratio of the positive electrode active material, the positive electrode binder, and the positive electrode conductive agent is 96:1-3:1-3; when the pouch battery cell 22 is the ternary lithium battery, in the positive electrode material of the pouch battery cell 22, the amount ratio of the positive electrode active material, the positive electrode binder, and the positive electrode conductive agent is 96:2-3:1-2.

It can be understood that when the pouch battery cell 22 is the lithium iron phosphate battery cell, in the positive electrode material of the pouch battery cell 22, the positive electrode active material accounts for 96 parts of the total weight of the positive electrode material, the binder accounts for 1 to 3 parts (for example, the part may include, but is not limited to, 1, 1.2, 1.5, 1.8, 2, 2.2, 2.5, 2.8, and 3 parts) of the total weight of the positive electrode material, and the conductive agent accounts for 1 to 3 parts (for example, the part may include, but is not limited to, 1, 1.2, 1.5, 1.8, 2, 2.2, 2.5, 2.8, and 3 parts) of the total weight of the positive electrode material.

Illustratively, when the pouch battery cell 22 is the lithium iron phosphate battery cell, the positive electrode active material is LFP (which may refer to LiFePO₄, i.e., lithium iron phosphate), the binder may be PVDF (polyvinylidene fluoride), and the conductive agent may be conductive carbon black. The ratio of LFP:PVDF:conductive carbon black may be 96:2:2; that is, the total weight of the positive electrode active material is divided into 100 parts, in which LFP accounts for 96 parts, PVDF accounts for 2 parts, and the conductive carbon black accounts for 2 parts. The weight of the positive electrode active material may be measured in grams.

When the pouch battery cell 22 is the ternary battery cell, in the positive electrode material of the pouch battery cell 22, the positive electrode active material accounts for 96 parts of the total weight of the positive electrode material, the binder accounts for 2 to 3 parts (for example, the part may include, but is not limited to, 2, 2.2, 2.5, 2.8,and 3 parts) of the total weight of the positive electrode material, and the conductive agent accounts for 1 to 2 parts (for example, the part may include, but is not limited to, 1, 1.2, 1.5, 1.8, and 2 parts) of the total weight of the positive electrode material. The ternary battery cell may be, but is not limited to, lithium nickel cobalt manganese oxide-based materials, lithium nickel cobalt aluminum oxide-based materials, or the like.

Illustratively, the ternary material of the ternary battery cell may be eight-series LiNi_{0.8}Co_{0.1}Mn_{0.1}O₂, and the ratio of the weight parts of the positive electrode active material, the binder, and the conductive agent is 96:2.5:1.5, that is, the total weight of the positive electrode material is divided into 100 parts, in which the eight-series LiNi_{0.8}Co_{0.1}Mn_{0.1}O₂ accounts for 96 parts, the binder accounts for 2.5 parts, and the conductive agent accounts for 1.5 parts.

In the above technical solution, when the pouch battery cell 22 is the lithium iron phosphate battery cell, the high proportion of the positive electrode active material means that a greater amount of electrochemically reactive materials can be accommodated within the limited electrode assembly, which is conducive to increasing the capacity and energy density of the battery apparatus 100, such that the lithium iron phosphate battery cell can output a higher amount of electricity while maintaining relatively small volume and weight, making it suitable for application scenarios requiring a certain level of energy density. In addition, when the amounts of the binder and the conductive agent are within the aforementioned ranges, the cost of auxiliary materials can be reduced, thus reducing the overall cost of the battery apparatus 100. When the pouch battery cell 22 is the ternary battery cell, due to the relatively complex structure and surface properties of the ternary material, the adoption of the aforementioned ratio of the positive electrode active material, the binder, and the conductive agent ensures the firm bonding between the positive electrode active material particles and between the active material and the current collector. Therefore, this configuration improves the mechanical stability and structural integrity of the electrode assembly, and reduces the risk of active material detachment and electrode pulverization during the charging and discharging processes, thereby extending the cycle life of the battery apparatus 100.

The present application provides an electric device 200, including the battery apparatus 100 according to the above embodiments.

Further, as shown in FIG. 1, the electric device 200 may be a vehicle, and the battery apparatus 100 may be integrated in the chassis of the vehicle, that is, the vehicle body is configured as a split vehicle body, the upper vehicle body and the integrated intelligent chassis are assembled together, and the battery apparatus 100 is formed as a part of the integrated intelligent chassis, such that the top plate of the case 30 participates in defining the floor of the vehicle body, thereby avoiding the meaningless multi-layer stacking of plates, reducing the material cost, enabling more reasonable use of space of the chassis, increasing the space inside the chassis for accommodating the battery apparatus 100, and achieving higher energy density.

Meanwhile, it should be noted that in the aforementioned thermal runaway simulation test, both the ternary and lithium iron phosphate materials can be prepared according to the above formula, and the details will not be repeated herein.

It can be understood that when the electric device 200 is configured as the vehicle, that is, the vehicle uses the above battery apparatus 100, the energy density of the battery apparatus 100 is higher, and the reliability is better, such that the driving safety of the vehicle can be improved while the endurance mileage of the vehicle is increased.

Other configurations and operations of the pouch battery cell 12, the battery apparatus 100, and the electric device 200 according to the embodiments of the present application are known to those of ordinary skill in the art, and will not be described herein.

In the description of this specification, the description of reference terms "one embodiment", "some embodiments", "a schematic embodiment", "an example", "a specific example", or "some examples" and the like means that a particular feature, structure, material, or characteristic described in connection with the embodiments or examples is included in at least one embodiment or example of the present application. In the specification, the schematic description of the aforementioned terms does not necessarily refer to the same embodiment or example. Moreover, the specific feature, structure, material, or characteristic described may be combined in a suitable manner in any one or more embodiments or examples.

Although the embodiments of the present application have been illustrated and described, it can be understood by those of ordinary skill in the art that various changes, modifications, replacements, and variations can be made to these embodiments without departing from the principle and purpose of the present application, and the scope of the present application is defined by the claims and equivalents thereof.

## Claims

1. A battery apparatus, comprising:
a plurality of battery sets (10), wherein the battery sets (10) are sequentially arranged along a first direction, the battery sets (10) comprise a wrapping shell (11) and at least one pouch battery cell (12), the pouch battery cell (12) is disposed inside the wrapping shell (11), and
among the plurality of the battery sets (10), a heat insulating member (20) is provided between at least two adjacent battery sets (10).

2. The battery apparatus according to claim 1, wherein the heat insulating member (20) is provided between each pair of adjacent battery sets (10).

3. The battery apparatus according to claim 1 or 2, wherein a thickness dimension of the heat insulating member (20) in the first direction is 1 mm to 4 mm.

4. The battery apparatus according to claim 3, wherein the pouch battery cell (12) is configured as a lithium iron phosphate battery, a total energy capacity within the battery set (10) is less than or equal to 1 KWh, and the thickness of the heat insulating member (20) is 1 mm to 2 mm.

5. The battery apparatus according to claim 3, wherein the pouch battery cell (12) is configured as a lithium iron phosphate battery, a total energy capacity within the battery set (10) is greater than 1 KWh, and the thickness of the heat insulating member (20) is 2 mm to 3 mm.

6. The battery apparatus according to claim 3, wherein the pouch battery cell (12) is configured as a ternary lithium battery, a total energy capacity within the battery set (10) is less than or equal to 1 KWh, and the thickness of the heat insulating member (20) is 2 mm to 3 mm.

7. The battery apparatus according to claim 3, wherein the pouch battery cell (12) is configured as a ternary lithium battery, a total energy capacity within the battery set (10) is greater than 1 KWh, and the thickness of the heat insulating member (20) is 3 mm to 4 mm.

8. The battery apparatus according to claim 1 or 2, wherein the wrapping shell (11) comprises: a first plate (111) and second plates (112) disposed on both sides of the first plate (111) in the first direction, the second plates (112) are opposite to the pouch battery cell (12) in the first direction, and the heat insulating member (20) is connected to the second plates (112).

9. The battery apparatus according to claim 8, wherein one end, facing away from the first plate (111), of the second plates (112) forms an opening, and the wrapping shell (11) is connected to a case (30) of the battery apparatus through a position of the opening.

10. The battery apparatus according to claim 9, wherein the case (30) is provided with a bottom plate (31), and end surfaces, away from the first plate (111), of the second plates (112) are connected to the bottom plate (31) through an adhesive layer (32).

11. The battery apparatus according to claim 10, wherein the bottom plate (31) is configured as a cold plate, and/or the bottom plate (31) is provided with a cold plate on a side facing the plurality of pouch battery cells (12), and the adhesive layer (32) is located between the cold plate and the plurality of pouch battery cells (12).

12. The battery apparatus according to claim 10, wherein the adhesive layer (32) comprises: an adhesive layer body (321) and an adhesive overflow part (322), wherein the adhesive overflow part (322) is located on one side, facing the plurality of pouch battery cells(12), of the adhesive layer body (321), and is located between adjacent pouch battery cells (12), and/or between the pouch battery cell (12) and the second plate (112), and/or between the second plate (112) and the heat insulating member (20).

13. The battery apparatus according to claim 8, wherein the pouch battery cell (12) comprises: a flexible shell (121) and an electrode assembly (122) disposed inside the flexible shell (121), wherein the flexible shell (121) is provided with a side surface (1211) opposite to a large surface of the electrode assembly (122) and a circumferential surface (1212) avoiding the large surface, and the side surface (1211), and/or the circumferential surface (1212) is provided with weak parts (1213); the wrapping shell (11) is provided with a pressure relief part (1111) at least partially opposite to the weak parts (1213), and the pressure relief part (1111) is formed on the first plate (111).

14. The battery apparatus according to claim 1 or 2, wherein in projection along the first direction, a projection contour of the pouch battery cell (12) is located within a range of a projection contour of the heat insulating member (20).

15. The battery apparatus according to claim 1, wherein the heat insulating member (20) is configured as one or more of a mica plate, a foam plate, and an aerogel plate.

16. The battery apparatus according to any one of claims 1 to 15, wherein the pouch battery cell (12) is any one of a lithium iron phosphate battery cell, a ternary lithium battery cell, and a solid-state battery cell.

17. The battery apparatus according to claim 16, wherein the pouch battery cell (12) is the lithium iron phosphate battery cell, and in a positive electrode material of the pouch battery cell (12), an amount ratio of a positive electrode active material, a positive electrode binder, and a positive electrode conductive agent is 96:1-3:1-3; the pouch battery cell (12) is the ternary lithium battery cell, and in a positive electrode material of the pouch battery cell (12), an amount ratio of a positive electrode active material, a positive electrode binder, and a positive electrode conductive agent is 96:2-3:1-2.

18. An electric device, comprising the battery apparatus according to any one of claims 1 to 17.
